(19) Europäisches Patentamt

European Patent Office

Office européen des brevets

(11) Veröffentlichungsnummer : **0 346 832 B1**

(12) **EUROPÄISCHE PATENTSCHRIFT**

(45) Veröffentlichungstag der Patentschrift :
**30.09.92 Patentblatt 92/40**

(21) Anmeldenummer : **89110690.8**

(22) Anmeldetag : **13.06.89**

(51) Int. Cl.⁵ : **C04B 41/45,** C04B 41/50,
B24C 3/00, C09K 3/14,
B24D 3/00

(54) Beschichtetes Siliciumcarbid-Schleifkorn.

(30) Priorität : **17.06.88 CH 2356/88**

(43) Veröffentlichungstag der Anmeldung :
**20.12.89 Patentblatt 89/51**

(45) Bekanntmachung des Hinweises auf die
Patenterteilung :
**30.09.92 Patentblatt 92/40**

(84) Benannte Vertragsstaaten :
**AT CH DE ES FR GB IT LI NL SE**

(56) Entgegenhaltungen :
**EP-A- 0 080 604**
**DE-A- 3 621 686**
**US-A- 1 910 444**
**US-A- 2 527 044**
**US-A- 2 541 658**

(73) Patentinhaber : **LONZA AG**
**Gampel/Wallis Geschäftsleitung Basel**
**CH-4002 Basel (CH)**

(72) Erfinder : **Kunz, Reiner, Dr. Dipl.-Chemiker**
**Königsbergerstrasse 33**
**W-7890 Waldshut-Tiengen (DE)**
Erfinder : **Dietrich, Rainer, Dr.**
**Thiersteinerrain 65**
**CH-4059 Basel (CH)**

(74) Vertreter : **Weinhold, Peter, Dr. et al**
**Patentanwälte Dr. V. Schmied-Kowarzik**
**Dipl.-Ing. G. Dannenberg Dr. P. Weinhold Dr. D.**
**Gudel Dipl.-Ing. S. Schubert Dr. P.**
**BarzSiegfriedstrasse 8**
**W-8000 München 40 (DE)**

EP 0 346 832 B1

Jouve, 18, rue Saint-Denis, 75001 PARIS

**Beschreibung**

Die Erfindung betrifft ein oberflächenbehandeltes Schleifkorn auf Basis von Siliciumcarbid und dessen Verwendung in kunstharzgebundenen oder keramisch gebundenen Schleifscheiben.

Siliciumcarbid ist eines der bedeutendsten Schleifmittel und wird insbesondere zum Schleifen und Trennen von harten und spröden Materialien eingesetzt. Es findet sowohl für lose Schleifmittel als auch für Schleifmittel auf Unterlage und Schleifkörper wie Schleif- oder Trennscheiben Verwendung. Die Schleifleistung und insbesondere das Verschleissverhältnis bzw. die Standzeit von Schleifkörpern hängt dabei nicht nur von den Eigenschaften des Schleifkorns selbst, sondern auch in erheblichem Masse von der Art und Festigkeit der Einbindung des Schleifkorns in das Bindemittel ab. Insbesondere bei kunstharzgebundenen Schleifmitteln ist die Haftung des Siliciumcarbidkorns im Bindemittel in der Regel die die Leistung und den Verschleiss bestimmende Grösse. Es wurden daher bereits zahlreiche Versuche unternommen, durch eine geeignete Behandlung der sehr glatten Oberfläche des Siliciumcarbids die Einbindung zu verbessern.

Eine häufig angewandte Methode ist die Herstellung eines keramischen Ueberzugs, der das Korn wie eine Glasur überzieht. Ein solches Verfahren beschreibt beispielsweise die US-PS 1 910 444. Wird dem Ueberzug ein schwer schmelzbares Material in einer Partikelgrösse, die erheblich unter der des Schleifkorns liegt, zugegeben, so erhält man einen aufgerauhten Ueberzug, wie er beispielsweise in der US-PS 2 527 044 beschrieben ist. In der DE-A-3 621 686 werden Agglomeratschlütörmer unter Verwendung eines Bindemittels mit hydrophiles Schichzsilikaten ummantelt und die Herstellung von kunstharzgebundenen Schleifmittels und beschrieben.

Allen derartigen Verfahren haften jedoch erhebliche Nachteile an. Sie erfordern mehrere Verfahrensschritte, darunter einen Brenn- oder Sintervorgang, und sind daher zeit- und energieaufwendig. Es bilden sich weiterhin durch Zusammenbacken der einzelnen Körner Agglomerate, die durch einen zusätzlichen Siebvorgang entfernt oder mechanisch zerstört werden müssen, wobei die eben aufgebrachte Beschichtung teilweise wieder verlorengeht. Unterhalb einer gewissen Korngrösse wird die Agglomeratbildung so vorherrschend, dass die Verfahren nicht mehr einsetzbar sind.

In keramisch gebundenen Schleifkörpern ist die Verwendung von keramisch ummanteltem Schleifkorn im allgemeinen nicht sinnvoll, da beim Brennen der Schleifkörper bei ca. 1150 bis 1400°C das Bindemittel des Ueberzugs wieder schmilzt und zusammen mit dem aufgebrachten Feinkorn (z.B. $Fe_2O_3$) in die keramische Masse eindringt und dort störende Reaktionen auslösen kann, die z.B. zur Porenbildung oder zu Farbabweichungen führen. Ferner kann das Bindemittel auch beim Gebrauch der Schleifkörper, insbesondere beim Trockenschliff, durch die Wärmeentwicklung erweichen und ein Ausbrechen des Korns verursachen.

Aufgabe der vorliegenden Erfindung ist deshalb eine Oberflächenbehandlung von Schleifkorn auf der Basis von Siliciumcarbid, die die Einbindung in kunstharzgebundene oder keramisch gebundene Schleifmittel verbessert, ohne die beschriebenen Nachteile aufzuweisen.

Ueberraschend wurde gefunden, dass diese Aufgabe erfindungsgemäss durch Beschichtung des Schleifkorns mit einem hochdispersen hydrophilen Metalloxid ohne zusätzliches Bindemittel gelöst werden kann. Das Siliciumcarbid-Schleifkorn kann mit seiner Korngrösse sowohl im Makro- als auch im Mikrobereich gemäss FEPA-Standard liegen. Als hochdisperses hydrophiles Metalloxid können Siliciumdioxid, wie z.B. Aerosil[R], Aluminiumoxid oder Titandioxid, jeweils einzeln oder als Gemisch, eingesetzt werden. Das hochdisperse hydrophile Metalloxid wird zweckmässig in einer Menge von 0,01 bis 5%, vorzugsweise von 0,1 bis 1,0%, bezogen auf das Gewicht des Schleifkorns, aufgebracht. Die Primärteilchengrösse ($d_{50}$-Wert) des hochdispersen hydrophilen Metalloxids liegt vorzugsweise zwischen 1 und 500 nm, besonders bevorzugt zwischen 5 und 50 nm, die spezifische Oberfläche (nach BET) vorzugsweise zwischen 5 und 500 $m^2/g$, besonders bevorzugt zwischen 50 und 400 $m^2/g$.

Das Aufbringen des hochdispersen hydrophilen Metalloxids auf das Schleifkorn erfolgt vorzugsweise durch Mischen des Schleifkorns mit dem hochdispersen hydrophilen Metalloxid in trockenem Zustand oder mit einer Suspension des hochdispersen hydrophilen Metalloxids in einer verdampfbaren Flüssigkeit und nachfolgendes Trocknen. Als verdampfbare Flüssigkeit wird vorzugsweise Wasser verwendet, es eignen sich jedoch auch andere polare oder unpolare Flüssigkeiten wie niedrige Alkohole, Ketone, Ester, Ether oder Kohlenwasserstoffe oder Gemische der genannten Flüssigkeiten. Die Mischung erfolgt besonders bevorzugt in trockenem Zustand. Als Mischer eignen sich insbesondere Freifallmischer, wie rotierende Trommelmischer oder Doppelkonusmischer, oder Mischer mit rotierenden Mischwerkzeugen wie Schaufel- oder Paddelmischer.

Eine bevorzugte Verwendung des erfindungsgemässen Schleifkorns ist die Herstellung von kunstharzgebundenen oder keramisch gebundenen Schleifkörpern, wie z.B. Schleif- oder Trennscheiben.

Es liegt natürlich auch im Rahmen der Erfindung, das erfindungsgemässe Schleifkorn in Kombination mit anderen Schleifkörnern zur Herstellung von Schleifkörpern zu verwenden, insbesondere mit Diamantschleifkorn oder Schleifkorn aus kubischem Bornitrid. Das erfindungsgemässe Siliciumcarbid-Schleifkorn kann hier-

EP 0 346 832 B1

bei sowohl als Stützkorn im schleifenden Bereich des Schleifkörpers als auch zur Verstärkung und besseren Wärmeabfuhr im tragenden Grundkörper verwendet werden.

Die nachfolgenden Beispiele veranschaulichen die Ausführung der Erfindung und die Eigenschaften des erfindungsgemässen Schleifkorns.

Beispiel 1

Eine Menge Siliciumcarbid (Carbogran[R] dunkel F 24, LONZA-Werke GmbH, Waldshut) wurde halbiert und eine Hälfte erfindungsgemäss mit 0,5 Gew.% hydrophilem $Al_2O_3$ (Primärpartikelgrösse $d_{50}$ = 20 nm, spez. Oberfläche (BET) = 100 ± 15 m$^2$/g) durch Trokkenmischung in einem Freifallmischer behandelt. Mit diesen Kornmustern wurden unter konstanten Bedingungen Trennscheiben wie folgt hergestellt.

Die Ausgangsmaterialien (73 Gew.% Korn, 13 Gew.% Füllstoffe (Kryolith), 14 Gew.% Phenolharzpulver und -flüssigkeit) wurden unter Zugabe des flüssigen Phenolharzanteils zu einer homogenen, rieselfähigen Masse verarbeitet und anschliessend in einer Pressform zwischen zwei Aussengeweben mit einem Druck von 19,6 Mpd (200 kg/cm$^2$) verpresst. Die Aushärtung der Scheiben erfolgte wie üblich in einem Ofen bei 190°C.

Die Schleifleistung wurde mit einer handelsüblichen Trennschleifmaschine an vibrationsverdichteten Betonbarren der Querschnittsdimension 80 x 60 mm ermittelt. Hierzu wurden pro Scheibe 5 Trennschnitte durchgeführt und als Mass für die Leistung der Scheibe die damit verbundene Scheibendurchmesserabnahme (in mm) ermittelt.

Die Ergebnisse zeigt Tabelle 1.


## Tabelle 1

Scheibendimension:     230 x 2,5 x 22 mm
Betonbarren:     80 x 60 mm
5 Trennschnitte

| | Carbogran[R] F 24 | |
| --- | --- | --- |
| | behandelt | unbehandelt |
| Durchschnitt der Spreng- geschwindigkeit (m/s) | 160 | 165 |
| Durchschnitt der Scheibendichte (g/cm$^3$) | 2,07 | 2,01 |
| Durchmesserabnahme (mm) | 11 | 14 |
| | 10 | 13 |
| | 13 | 17 |
| Durchschnitt der Durchmesserabnahme (mm) | 11,3 | 14,7 |
| Relat. Leistungsfaktor | 123% | 100% |


Beispiel 2

Analog zu Beispiel 1 wurden Trennscheiben hergestellt und getestet.
Zusammensetzung der Scheiben: 78 Gew.% Schleifkorn, 8 Gew.%
    Füllstoffe (Kryolith), 14 Gew.% Phenolharzpulver und -flüssigkeit.
Die Ergebnisse zeigt Tabelle 2.

3

## Tabelle 2

Scheibendimension:      230 x 3 x 22 mm
Betonbarren:      80 x 60 mm
5 Trennschnitte

| | Carbogran[R] F 24 | |
| | behandelt | unbehandelt |
|---|---|---|
| Scheibendichte (g/cm$^3$) | 2,10 | 2,13 |
| Durchmesserabnahme (mm) | 20 | 26 |
| | 19 | 24 |
| | 21 | 25 |
| Durchschnittswert (mm) | 20 | 25 |
| Relat. Leistungsfaktor | 120% | 100% |

Beispiel 3

Eine Produktionscharge Siliciumcarbid (Carbogran[R], Gotthardwerke Bodio; Körnung 0,4 bis 1 mm) wurde in 4 Teile geteilt. Ein Teil der Mischung wurde als Standardkorn nicht behandelt. Die restlichen 3 Teile wurden erfindungsgemäss jeweils mit

    a) 0,5 Gew.% hydrophilem $Al_2O_3$ ($d_{50}$ = 20 nm, spez. Oberfläche (BET) = 100 ± 15 m$^2$/g)
    b) 0,5 Gew.% hydrophilem $TiO_2$ ($d_{50}$ = 21 nm, spez. Oberfläche (BET) = 50 ± 15 m$^2$/g)
    c) 0,5 Gew.% hydrophilem $SiO_2$ ($d_{50}$ = 7 nm, spez. Oberfläche (BET) = 380 ± 30 m$^2$/g)

durch Mischen in einem Freifallmischer oberflächlich umhüllt.
Das weitere Vorgehen erfolgte analog Beispiel 1.
Die Ergebnisse zeigt Tabelle 3 anhand der Durchschnittswerte.

## Tabelle 3

Scheibendimension:      230 x 2,5 x 22 mm
Betonbarren:      80 x 60 mm
5 Trennschnitte

| | | Carbogran[R] 0,4 bis 1 mm | | |
| | unbehandelt | 0,5% $Al_2O_3$ | 0,5 % $TiO_2$ | 0,5% $SiO_2$ |
|---|---|---|---|---|
| Sprenggeschwindigkeit (m/s) | 163,9 | 164,9 | 163,9 | 165 |
| Scheibendichte (g/cm$^3$) | 2,04 | 2,02 | 2,04 | 2,02 |
| Durchmesserabnahme (mm) | 10 | 8,3 | 8,3 | 8,3 |
| Relat. Leistungsfaktor | 100% | 117% | 117% | 117% |

Beispiel 4 (Vergleichsbeispiel)

Eine Produktionscharge Siliciumcarbid (Carbogran[R] F 24, LONZA-Werke GmbH, Waldshut) wurde halbiert und eine Hälfte nach dem Stand der Technik mit einem keramisch gebundenen Ueberzug versehen.

Rezeptur:  150 kg  Siliciumcarbid F 24

900 $cm^3$  Natronwasserglas (Typ 37/40, Fa. van Baerle + Co., $d^{20} = 1,35$ $g/cm^3$)

1000 $cm^3$  Wasser

1600 g  Eisenoxid (Bayferrox[R] 180, Fa. Bayer)

800 g  Glasurfritte (Typ A8962p, Fa. Reimbold + Strick)

Die Glasurfritte wurde mit dem Wasser und dem Wasserglas zu einer gleichmässigen Suspension verarbeitet. Das Schleifkorn wurde damit in einem Trommelmischer benetzt, das Eisenoxid in 4 Portionen zugegeben und die gesamte Mischung ca. 10 bis 15 Minuten im Mischer homogenisiert. Die so aufgebrachte Beschichtung aus Eisenoxid und Bindemittel wurde in einem Drehrohrofen bei 740°C und einer mittleren Verweilzeit von 10 bis 15 Minuten aufgesintert.
Die Scheibenherstellung und die Scheibentests erfolgten analog Beispiel 1.
Die Ergebnisse zeigt Tabelle 4 (Durchschnittswerte).

Tabelle 4

Scheibendimension:    230 x 2,5 x 22 mm
Betonbarren:          80 x 60 mm
5 Trennschnitte

|  | Carbogran[R] F 24 keramisch ummantelt | unbehandelt |
|---|---|---|
| Scheibendichte ($g/cm^3$) | 2,04 | 2,02 |
| Sprenggeschwindigkeit (m/s) | 166,2 | 164,4 |
| Durchmesserabnahme (mm) | 12 13 12 | 14 17 14 |
| Durchschnittsabnahme (mm) | 12,3 | 15,0 |
| Relat. Leistungsfaktor | 118% | 100% |

**Patentansprüche**

1.   Schleifkorn auf Basis von Siliciumcarbid, gekennzeichnet durch eine bindemittelfreie unverschmolzene

5

Beschichtung aus 0,01 bis 5%, bezogen auf das Gewicht des Schleifkorns, eines hochdispersen hydrophilen Metalloxids aus der Gruppe Siliciumdioxid, Aluminiumoxid und Titandioxid.

2. Schleifkorn nach Patentanspruch 1, dadurch gekennzeichnet, dass das hochdisperse hydrophile Metalloxid in einer Menge von 0,1 bis 1,0%, bezogen auf das Gewicht des Schleifkorns, aufgebracht ist.

3. Schleifkorn nach mindestens einem der Patentansprüche 1 bis 2, dadurch gekennzeichnet, dass das hochdisperse hydrophile Metalloxid in einer Partikelgrösse der Primärteilchen von 1 bis 500 nm im $d_{50}$-Wert und einer spezifischen Oberfläche von 5 bis 500 m$^2$/g nach BET vorliegt.

4. Schleifkorn nach mindestens einem der Patentansprüche 1 bis 2, dadurch gekennzeichnet, dass das hochdisperse hydrophile Metalloxid in einer Partikelgrösse der Primärteilchen von 5 bis 50 nm im $d_{50}$-Wert und einer spezifischen Oberfläche von 50 bis 400 m$^2$/g nach BET vorliegt.

5. Verfahren zur Herstellung des Schleifkorns nach mindestens einem der Patentansprüche 1 bis 4, dadurch gekennzeichnet, dass Siliciumcarbid-Schleifkorn durch Mischen in trockenem Zustand mit dem hochdispersen hydrophilen Metalloxid beschichtet wird.

6. Verfahren zur Herstellung des Schleifkorns nach mindestens einem der Patentansprüche 1 bis 4, dadurch gekennzeichnet, dass Siliciumcarbid-Schleifkorn durch Mischen mit einer Suspension des hochdispersen hydrophilen Metalloxids in einer verdampfbaren Flüssigkeit und anschliessendes Trocknen beschichtet wird.

7. Verwendung des Schleifkorns nach mindestens einem der Patentansprüche 1 bis 4 in kunstharzgebundenen Schleifkörpern.

8. Verwendung des Schleifkorns nach mindestens einem der Patentansprüche 1 bis 4 in keramisch gebundenen Schleifkörpern.


## Claims

1. Abrasive granular particle on the basis of silicon carbide, characterized by a binder-free non-molten coating of 0.01 to 5 %, based on the weight of the abrasive particle, of a highly disperse hydrophilic metal oxide from the group of silicon dioxide, aluminum oxide and titanium dioxide.

2. Abrasive particle according to claim 1, characterized in that the highly disperse hydrophilic metal oxide is applied in an amount of 0.1 to 1.0 %, based on the weight of the abrasive particle.

3. Abrasive particle according to at least one of patent claims 1 to 2, characterized in that the highly disperse hydrophilic metal oxide has a particle size of the primary particles of 1 to 500 nm in the $d_{50}$-value and a specific surface area of 5 to 500 m$^2$/g according to BET.

4. Abrasive particle according to at least one of patent claims 1 to 2, characterized in that the highly disperse hydrophilic metal oxide has a particle size of the primary particles of 5 to 50 nn in the $d_{50}$-value and a specific surface area of 50 to 400 m$^2$/g according to BET.

5. Process for the preparation of the abrasive particle according to at least one of patent claims 1 to 4, characterized in that the abrasive silicon carbide particle is coated by blending with the highly disperse hydrophilic metal oxide in dry state.

6. Process for the preparation of the abrasive particle according to at least one of patent claims 1 to 4, characterized in that the abrasive silicon carbide particle is coated by blending with a suspension of the highly disperse hydrophilic metal oxide in an evaporable liquid and by subsequent drying.

7. Use of the abrasive particle according to at least one of patent claims 1 to 4 in synthetic resin-bonded grinding elements.

8. Use of the abrasive particle according to at least one of patent claims 1 to 4 in ceramic-bonded grinding elements.

## Revendications

1.  Granule abrasif à base de carbure de silicium, caractérisé par un revêtement non fusionné exempt de liant de 0,01 jusqu'à 5 % rapportés au poids du granule abrasif, d'un oxyde métallique hydrophile bien dispersé appartenant au groupe du dioxyde de silicium, de l'oxyde d'aluminium et du dioxyde de titane.

2.  Granule abrasif selon la revendication 1, caractérisé en ce que l'oxyde métallique hydrophile bien dispersé est appliqué dans une quantité de 0,1 jusqu'à 1,0 % rapporté au poids du granule abrasif.

3.  Granule abrasif selon au moins l'une des revendications 1 à 2, caractérisé en ce que l'oxyde métallique hydrophile bien dispersé se présente sous une taille particulaire des particules primaires de 1 à 500 nm en valeur $d_{50}$ et avec une surface spécifique de 5 à 500 m²/g selon BET.

4.  Granule abrasif selon au moins l'une des revendications 1 à 2, caractérisé en ce que l'oxyde métallique hydrophile bien dispersé se présente sous une taille particulaire des particules primaires de 5 à 50 nm en valeur $d_{50}$ et avec une surface spécifique de 50 à 400 m²/g selon BET.

5.  Procédé pour la préparation du granule abrasif selon au moins l'une des revendications 1 à 4, caractérisé en ce que le granule abrasif au carbure de silicium est revêtu par mélange à l'état sec d'un oxyde métallique hydrophile bien dispersé.

6.  Procédé pour la préparation du granule abrasif selon au moins l'une des revendications 1 à 4, caractérisé en ce que le granule abrasif de carbure de silicium est revêtu par mélange d'une suspension d'oxyde métallique hydrophile bien dispersé dans un liquide évaporable et séchage consécutif.

7.  Utilisation du granule abrasif selon au moins l'une des revendications 1 à 4, dans des corps abrasifs liés à la résine synthétique.

8.  Utilisation du corps abrasif selon au moins l'une des revendications 1 à 4, dans des corps abrasifs liés par de la céramique.